# EUROPÄISCHE PATENTSCHRIFT

(11) **EP 2 802 844 B1**
(45) Veröffentlichungstag und Bekanntmachung des Hinweises auf die Patenterteilung: **20.03.2019**
(21) Anmeldenummer: 12813846.8
(22) Anmeldetag: 20.12.2012
(51) Int. Cl.: G01D 3/08, G01D 21/00

(54) **SENSORSYSTEM FÜR EIN GARGERÄT**
SENSOR SYSTEM FOR A COOKING DEVICE
SYSTÈME DE DÉTECTION DESTINÉ À UN APPAREIL DE CUISSON

(30) Priorität: 11.01.2012 DE 102012200295
(43) Veröffentlichungstag der Anmeldung: 19.11.2014
(73) Patentinhaber: BSH Hausgeräte GmbH, 81739 München (DE)
(72) Erfinder: SCHEMMERER, Roman, 83349 Palling (DE); SIPPEL, Matthias, 83329 Waging am See (DE); VORMANN, Ingo, 83413 Fridolfing (DE)
(74) Vertreter: Lang, Michael
(86) Internationale Anmeldenummer: PCT/EP2012/076414
(87) Internationale Veröffentlichungsnummer: WO 2013/104510

(56) Entgegenhaltungen:
- EP-A1- 1 037 508
- EP-A2- 1 239 703
- EP-A2- 2 199 766
- WO-A2-2010/093234
- DE-A1- 3 225 486
- DE-A1-102007 017 632
- US-A1- 2010 090 655

## Beschreibung

Die Erfindung betrifft ein Sensorsystem für ein Gargerät.

Für das automatisierte Kochen bzw. zur Unterstützung des Kochprozesses im Allgemeinen soll ein System entwickelt werden, welches drahtlos verschiedene Parameter, insbesondere Temperatur, Druck, Feuchte oder Füllstand des Kochprozesses erfasst und diese an die Steuerung des Kochfeldes weiter gibt.

EP 2 199 766 A2 beschreibt eine Einheit zur kalibrierfreien Aufbereitung von Messdaten eines Sensors.

Hierbei stellt die Energieversorgung ein Problem dar. Batterien zur Versorgung der Daten- oder Signalaufbereitung sind stark wärmeempfindlich und somit nur eingeschränkt in der unmittelbaren Nähe eines Gargeräts einsetzbar.

EP 1726882 A1 beschreibt ein Gargerät zum Zubereiten von Gargut mit einer Heizvorrichtung zum Erwärmen eines Kochfeldes, mit einer elektronischen Steuerungseinrichtung zum Ansteuern der Heizvorrichtung und mit einer Sende-Empfangs-Einheit, die mit der Steuerungseinrichtung gekoppelt ist. Dem Gargerät sind wenigstens ein RFID-Transponder (RFID: Hochfrequenz-Identifikation), der mit der Sende-Empfangs-Einheit drahtlos gekoppelt ist, und wenigstens ein Temperatursensor, der mit dem RFID-Transponder elektrisch gekoppelt ist, zugeordnet. Der Temperatursensor ist am oder im Gargut positionierbar oder befestigbar.

Hierbei ist es von Nachteil, dass es sich um eine Übertragung gemessener Werte handelt, die basierend auf RFID auch entsprechend ausgestaltete Transceiver auf der Seite des Gargeräts benötigt. Insbesondere fehlt eine ausreichende Energieversorgung des Sensorsystems. So ist mangels ausreichender elektrischer Energie auch eine Datenverarbeitung oder Datenaufbereitung auf Seiten des Sensors ausgeschlossen.

Die **Aufgabe** der Erfindung besteht darin, die vorstehend genannten Nachteile zu vermeiden und insbesondere ein Kochgeschirr, aufweisend ein Sensorsystem anzugeben, welches in der Lage ist, einerseits eine Aufbereitung von Signalen oder Daten eines Sensors zu ermöglichen und andererseits dafür auch im Umfeld eines Gargeräts ausreichend Energie bereitzustellen.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Kochgeschirr, aufweisend ein Sensorsystem wie definiert in Anspruch 1 vorgeschlagen. Die Kombination der Einheiten aus einem oder mehreren Sensoren, der kalibrierfreien Aufbereitung und dem Energy-Harvester sowie insbesondere auch der Funk-Übertragungseinheit ermöglicht sowohl eine Berücksichtigung von Sensor-Charakteristika als auch eine ausreichende Energieversorgung.

Der Begriff "gekoppelt" kann insbesondere eine elektrische Verbindung umfassen. Diese kann durch feste Verschaltung oder durch Steckverbindungen erfolgen. Da eine Funk-Übertragungseinheit bereitgestellt ist, sind diese Komponenten insbesondere als ein mobiles Sensorsystem ausgestaltbar.

Die Spannungsversorgung erfolgt somit zumindest primär mit zumindest einem Energy-Harvester, da bis dato keine handelsüblichen Batterien die Betriebstemperatur des Systems langfristig überleben. Möglich sind hier insbesondere Solarzellen, Thermowandler, eine (elektro-)magnetische Fernspeisung oder proprietäre Primär- oder Sekundärzellen. Gemäß der Erfindung weist der Energy-Harvester auf jedem Fall einen Thermowandler auf. Die endgültige Spannung kann anschließend mit effizienten DC-DC-Wandlern (DC: Gleichspannung) erzeugt werden.

Eine Weiterbildung ist es, dass der Sensor ein kapazitiver Sensor oder ein resistiver Sensor ist. Der Einsatz eines so ausgestalteten Sensors unterstützt den Einsatz einer kalibrierfreien Aufbereitung von Sensordaten. Ein kapazitiver Sensor kann dabei so angesteuert bzw. geschaltet werden, dass er als eine sich proportional zu einem ohmschen Widerstand verhaltende Größe wirkt.

Eine andere Weiterbildung ist es, dass der Sensor mindestens einen der folgenden Sensoren umfasst: einen Drucksensor, einen Feuchtesensor, einen PH-Sensor, einen Leitfähigkeitssensor, einen Viskositätssensor, einen Temperatursensor. Mit anderen Worten ist eine Vielzahl verschiedener Sensortypen in Verbindung mit einem solchen Sensorsystem einsetzbar, wobei auch verschiedene solcher Sensoren gemeinsam in das Sensorsystem integriert oder daran angeschlossen sein können.

Insbesondere ist es eine Weiterbildung, dass die Einheit zur kalibrierfreien Aufbereitung eine Einheit zur analogen Signalaufbereitung und einen Mikrocontroller aufweist. Dies ermöglicht sowohl die analogen Signale eines Sensors zu erfassen und/oder eine digitale Aufbereitung durchzuführen, so dass eine kalibrierfreie Aufbereitung innerhalb der mobilen Sensoreinheit durchführbar ist.

Gemäß der Erfindung wie definiert in Anspruch 1 ist die Einheit zur kalibrierfreien Aufbereitung ausgelegt mit am Eingang eines Messzweiges zumindest einem Multiplexer, über den eine Referenz und deren Referenzgröße, insbesondere interne Kalibrierwiderstände, und insbesondere mehrere zu messende externe Sensoren in Form von z.B. Widerstandstemperatursensoren nacheinander an den Messzweig geschaltet werden, so dass vor jeder Messung mit einem solchen Sensor zunächst die bekannten Referenzgrößen gemessen werden und danach der zu bestimmende Sensor oder nacheinander zu bestimmende Sensoren.

Eine Weiterbildung davon ist, dass die Einheit zur kalibrierfreien Aufbereitung ausgelegt ist, jeweils den ohmschen Widerstand der Referenzgrößen, insbesondere Widerstände, oder eine sich proportional zum ohmschen Widerstand verhaltende Größe der Referenz zu messen, und einen Messstrom einzuprägen, um einen Spannungsabfall an der zugeschalteten Referenzgröße zu messen. Insbesondere wird auch das Einprägen eines ausreichend großen Messstroms dadurch ermöglicht, dass eine ausreichende Energieversorgung durch den Energy-Harvester bereitstellbar ist.

Im Rahmen einer zusätzlichen Weiterbildung weist der Energy-Harvester weiter mindestens eine der folgenden Komponenten auf: eine Solarzelle, eine elektromagnetische Kopplung. Je nach Umgebungsbedingung des geplanten Einsatzortes kann so ein Sensorsystem mit einem geeigneten Versorgungssystem bereitgestellt werden.

Eine nächste Weiterbildung besteht darin, dass der Energy-Harvester einen Energiespeicher aufweist oder einem Energiespeicher zugeordnet ist. Dadurch kann zwischenzeitlich vom Energy-Harvester aufgenommene Energie gespeichert werden, bis diese von den übrigen Komponenten des Sensorsystems benötigt wird. Insbesondere kann ein größerer Strombedarf, der z.B. während einer Messung besteht, durch zwischen Messungen aufgenommene Energie gedeckt werden. Ein solcher Energiespeicher kann direkt der Energie- oder Spannungsversorgungseinheit zugeordnet oder aber auch in oder an der Einheit zur kalibrierfreien Aufbereitung angeordnet sein.

Eine Ausgestaltung ist es, dass der Energy-Harvester über einen Wandler, insbesondere über einen Hochsetzer und/oder einen Tiefsetzer mit der Einheit zur kalibrierfreien Aufbereitung gekoppelt ist. Dadurch kann der Energy-Harvester einfach für verschiedene Betriebsbedingungen ausgewählt und zur Versorgung der ansonsten standardisiert bereitstellbaren weiteren Komponenten eingesetzt werden.

Eine weitere Ausführungsform besteht darin, dass das Sensorsystem über die Funk-Übertragungseinheit, insbesondere einen Funktransceiver mit einer Steuereinheit des Gargeräts koppelbar ist. Dadurch kann das Sensorsystem variabel und unabhängig von einer Kabelführung zu dem Gargerät eingesetzt werden.

Eine nächste Ausgestaltung ist es, dass mittels der Funk-Übertragungseinheit Nachrichten zwischen dem Sensorsystem und dem Gargerät austauschbar sind. Dadurch kann eine effektive Steuerung beispielsweise verschiedener Funktionen des Gargeräts und/oder des mobilen Sensorsystems realisiert werden. So können verschiedenartige integrierte Sensortypen nach Bedarf ein- und ausgeschaltet werden, um so den Aufbereitungs- und Energiebedarf auf ein notweniges Maß zu reduzieren.

Die vorstehend genannte Aufgabe wird auch gelöst durch ein Verfahren zur Datenübertragung zwischen einem Sensorsystem und einem Gargerät, bei dem von einem Sensor Messwerte aufgenommen und von einer Einheit zur kalibrierfreien Aufbereitung verarbeitet und über eine Funk-Übertragungseinheit an das Gargerät übermittelt werden, wobei die Einheit zur kalibrierfreien Aufbereitung gekoppelt von einem Energy-Harvester mit Energie versorgt wird.

Die vorstehend genannte Aufgabe wird auch gelöst durch ein Gargerät mit einer Steuereinheit, die derart eingerichtet ist, dass von mindestens einem derart ausgebildeten Sensorsystem erhaltene Daten bzw. Messwerte verarbeitbar sind.

Ein Ausführungsbeispiel der Erfindung wird nachfolgend anhand der Zeichnungen dargestellt und erläutert.

Es zeigt:

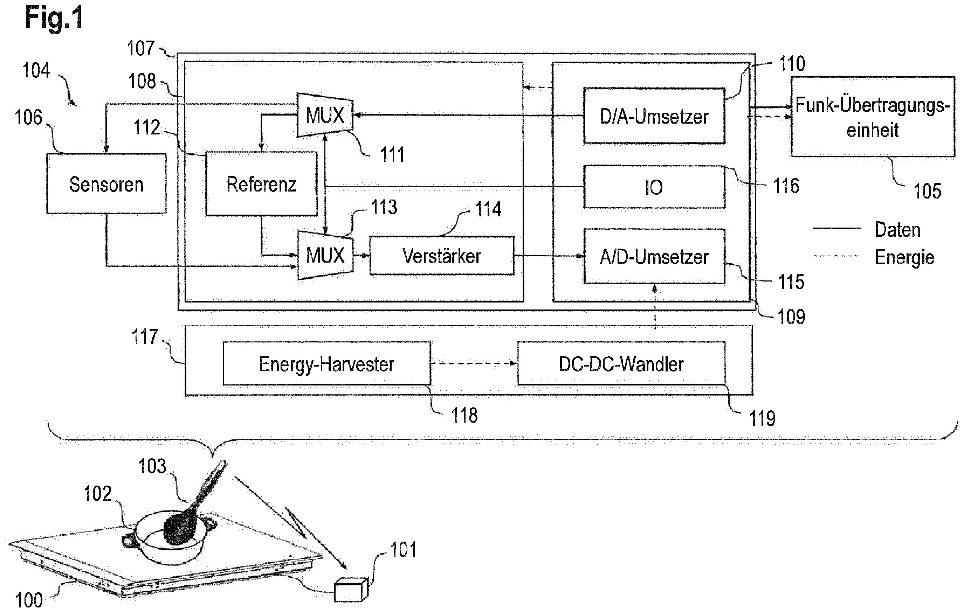

- Fig.1: ein Sensorsystem für ein Gargerät mit einem Energy-Harvester und einer Funk-Übertragungseinheit.

**Fig.1** zeigt ein Kochfeld 100 eines Gargeräts. An eine Steuereinheit des Gargeräts ist ein Sensorsystem ankoppelbar, um einen Garvorgang in einem auf dem Kochfeld erhitzten Kochgeschirr 102 mittels der Steuereinheit abhängig von Prozessparametern (zumindest teilweise des Kochgeschirrs 102) regeln zu können.

Das Sensorsystem weist eine mobile Sensoreinheit 103 auf, die insbesondere über eine integrierte oder angeschlossene Funk-Übertragungseinheit 105 an eine Funk-Übertragungseinheit 101 des Gargeräts ankoppelbar ist. Unter einem Kochgeschirr werden hier z.B. Gefäße verstanden, die zur Zubereitung warmer Speisen dienen, also insbesondere auch Kochlöffel, Kochtöpfe und Bratpfannen.

Das Sensorsystem besteht somit insbesondere aus der mobilen Sensoreinheit 103 mit einerseits zumindest einem Sensor 106 und der Funk-Übertragungseinheit 105 und andererseits der Funk-Übertragungseinheit 101 am Kochfeld 100 bzw. am Gargerät.

Die Funk-Übertragungseinheit 105 der Sensoreinheit 103 ist insbesondere eine Sendeeinheit, kann aber für eventuelle bidirektionale Übertragungen auch als Sende-/ Empfangseinheit bzw. Transceiver ausgebildet sein. Insbesondere handelt es sich um einen sogenannten Low-Power-Funktransceiver als der Funk-Übertragungseinheit 105.

Die Funk-Übertragungseinheit 101 ist insbesondere eine Empfangseinheit am Gargerät, kann aber für eventuelle bidirektionale Übertragungen auch als Sende-/ Empfangseinheit bzw. Transceiver ausgebildet sein. Die Empfangseinheit kann sowohl intern als auch extern mit einem Kabel an der Steuereinheit des Gargeräts angeschlossen sein.

Die mobile Sensoreinheit 103 enthält als funktionale Einheiten und elektronische Komponenten 104 neben dem Sensor 106 und der Funk-Übertragungseinheit 105 eine dazwischen gekoppelte oder geschaltete Einheit zur kalibrierfreien Aufbereitung 107.

Die Einheit zur kalibrierfreien Aufbereitung 107 umfasst eine Einheit zur analogen Signalaufbereitung 108 und einen Mikrocontroller 109 als eine Steuereinheit. Die Einheit zur analogen Signalaufbereitung 108 ist zwischen den Mikrocontroller 109 und den Sensor 106 gekoppelt. Außerdem ist an die Einheit zur kalibrierfreien Aufbereitung 107, insbesondere an deren Mikrocontroller 109 die Funk-Übertragungseinheit 105 angeschlossen oder gekoppelt.

Der Mikrocontroller 109 weist einen Digital-Analog-Umsetzer 110 auf, dessen Ausgang an einen Multiplexer 111 angelegt ist. Daran schaltbare weitere Ein- bzw. Ausgänge des Multiplexers 111 liegen an dem zumindest einen Sensor 106 und an einer Referenzeinheit 112 an. Im Fall eines resistiven Sensors 106 ist die Referenzeinheit 112 entsprechend resistiv ausgestaltet und im Fall eines kapazitiven Sensors 106 ist die Referenzeinheit 112 entsprechend kapazitiv ausgestaltet.

Mit deren jeweils anderen Anschlüssen sind der Sensor 106 und die Referenzeinheit 112 an Ein- bzw. Ausgänge eines weiteren Multiplexers 113 angeschlossen. Der andere Anschluss des weiteren Multiplexers 113 ist an einen Eingang eines Verstärkers 114 angelegt. Der Verstärker 114 dient zur Signal- oder Pegel-Anpassung. Ein Ausgang des Verstärkers 114 ist an einen Analog/Digital-Umsetzer 115 angelegt. Der Analog/Digital-Umsetzer 115 ist beispielsweise Teil des Mikrocontrollers 109.

Der Mikrocontroller 109 weist außerdem eine Ein-/Ausgabe-Schnittstelle 116 auf. Dabei handelt es sich insbesondere um eine Schnittstelle für allgemeine Zwecke oder für Steuer- oder Anzeigezwecke durch weiterer Komponenten, z.B. Schalter oder Anzeigeelemente. Die Ein-/Ausgabe-Schnittstelle 116 legt Signale bzw. Werte an die beiden Multiplexer 111, 113 an.

Der Sensorteil mit dem zumindest einen Sensor 106 kann z.B. neben mehreren Temperatursensoren, die gleichzeitig den Füllstand eines Topfes erfassen können, noch Druck-, Feuchte-, PH-, Leitfähigkeits- und Viskositäts- Sensoren enthalten. Eine Wärmekapazität kann beispielsweise über die Abklingkurven im getakteten Heizbetrieb errechnet werden. Die analoge Signalaufbereitung umfasst insbesondere die Bereitstellung benötigter Messspannungen und -ströme, eine Multiplexerschaltung mit den Multiplexern 111, 113 zum Ansprechen auch mehrerer Sensoren 106, die Referenzeinheit 112, mit der eine Kalibrierung der Sensoren 106 entfallen kann, sowie in dem Verstärker 114 eine Bereichsanpassung der Ausgangsspannungen der Sensoren 106 an den Eingangsbereich des Analog-Digital-Umsetzers 115 des Mikrocontrollers 109.

Der Mikrocontroller 109, der unter anderem das Energiemanagement des sensorseitigen Sensorsystems übernimmt, erfasst Sensorsignale und führt eine erste Signalauswertung durch. Anschließend werden die digitalen Sensorwerte mittels der Funk-Übertragungseinheit 105, insbesondere eines Low-Power-Funktransceivers, zur Empfangsstation bzw. der Funk-Übertragungseinheit 101 des Gargeräts übermittelt. Hierbei können zur Reduktion des Transferaufkommens nur oder teilweise Veränderungen der Daten (differentielle Übertragung) übermittelt werden. Nach einer bestimmten Zeit kann ein vollständiger Datenrahmen (Keyframe) übertragen werden, der zum Abgleich der Werte im Kochfeld dient.

Zur Versorgung mit Energie, insbesondere zum Anlegen einer Spannung bzw. eines Stromes weist die das Sensorsystem eine Energie- oder Spannungsversorgungseinheit 117 auf. Die Energie- oder Spannungsversorgungseinheit 117 umfasst einen so genannten Energy-Harvester 118.

Der Energy-Harvester 118 ist allgemein ausgedrückt eine Einrichtung, welche in der Umgebung frei verfügbare Energie aufnimmt und in umgewandelter Form als Spannung bzw. Strom für andere Einheiten bereitstellt. Beispielsweise weist ein solcher Energy-Harvester 118 eine Fotozelle auf, welche Licht in Spannung umsetzt. Aber auch zum Einsatz anderer Energieformen wie z.B. aus Wärme oder durch Umwandlung chemischer Substanzen können Energy-Harvester 118 zur Stromerzeugung ausgestaltet sein.

Vom Energy-Harvester 118 aufgenommene Energie wird in Form einer Spannung an einen Gleichspannung-Gleichspannungs-Wandler 119 angelegt. Ausgehend von dem Wandler 119 legt die Energie- oder Spannungsversorgungseinheit 117 die entsprechende Energie bzw. Spannung an die Einheit zur kalibrierfreien Aufbereitung 107 an.

Das Anlegen bzw. Übertragen von Daten oder Signalen ist in der Zeichnung mit durchgezogenen Linien dargestellt. Das Anlegen von Energie ist mit gestrichelten Linien dargestellt.

Die Einheit zur kalibrierfreien Aufbereitung 107 legt die angelegte Energie an ihre einzelnen Komponenten an, insbesondere an ihren Mikrocontroller 109 und an die Einheit zur analogen Signalaufbereitung 108.

Von der Einheit zur kalibrierfreien Aufbereitung 107 werden an die Funk-Übertragungseinheit 105 sowohl zu übertragende Daten als auch Energie angelegt.

Eine bevorzugte Einheit zur kalibrierfreien Aufbereitung bzw. kalibrierfreien Ansteuerung ist in EP 2 199 766 A2 beschrieben. Bei der darin beschriebenen Schaltung zur ratiometrischen Temperaturmessung befindet sich typischerweise am Eingang des Messzweiges ein Multiplexer, über den zwei interne Kalibrierwiderstände und mehrere zu messende externe Widerstandstemperatursensoren als solche Sensoren 106 nacheinander an den Messzweig geschaltet werden. Vor jeder Temperaturmessung werden üblicherweise zunächst die beiden bekannten Kalibrierwiderstände als Referenzgrößen der Referenz 112 gemessen und danach der zu bestimmende Widerstandstemperatursensor oder nacheinander die zu bestimmenden Widerstandstemperatursensoren. Bei der Messung wird jeweils der ohmsche Widerstand der Widerstände gemessen, oder es wird jeweils eine Größe gemessen, die sich proportional zum ohmschen Widerstand verhält. Üblicherweise wird ein Messstrom eingeprägt und der Spannungsabfall an dem zugeschalteten Widerstand gemessen. Die beiden Kalibrierwiderstände werden üblicherweise so gewählt, dass der eine Kalibrierwiderstand in der Nähe des Minimalwertes des Messbereiches liegt und der andere Kalibrierwiderstand in der Nähe des Maximalwertes des Messbereiches. Durch die beiden vorgegebenen Kalibrierwiderstandswerte und die zugehörigen realen Messwerte ist eine Gerade definiert, entlang welcher interpoliert und/oder extrapoliert werden kann. Durch eine lineare Interpolation oder Extrapolation auf dieser Geraden wird aus dem Messwert des Widerstandstemperaturfühlers sein ohmscher Widerstand und damit die abgefühlte Temperatur errechnet. Die Breite des maximalen Messbereichs ist durch eine Einstellung der Auswerteelektronik wählbar.

### Weitere Vorteile:

Mit dem vorgeschlagenen Sensorsystem können die Regeleigenschaften des Kochfeldes durch die zusätzlichen Sensorinformationen erheblich verbessert werden. Des Weiteren können so neue Programme für das automatisierte Kochen erst realisiert werden.

Die konstruktive Ausführung des Sensorsystems als mobiler Einheit oder als Teil der mobilen Einheit kann beispielsweise in Form eines Kochgeschirrs, z. B. eines Löffels, oder in Form eines Fühlers mit flexibler Sensorik erfolgen. Bei beiden Konzepten befindet sich die Elektronik bevorzugt außerhalb des Topfes, während die eigentlichen Sensorwertmessungen im Topf stattfinden. Dadurch wird auch eine ungestörte Funkübertragung ermöglicht, da die Funksignale keine Topfwand durchdringen müssen.

### Bezugszeichenliste

- 100: Gargerät
- 101: Funk-Übertragungseinheit des Gargeräts
- 102: Kochgeschirr
- 103: Sensoreinheit
- 104: Komponenten der Sensoreinheit
- 105: Funk-Übertragungseinheit der Sensoreinheit
- 106: Sensor
- 107: Einheit zur kalibrierfreien Aufbereitung
- 108: Einheit zur analogen Signalaufbereitung
- 109: Mikrocontroller
- 110: Digital/Analog-Umsetzer
- 111: Multiplexer
- 112: Referenzeinheit
- 113: Multiplexer
- 114: Verstärker
- 115: Analog/Digital-Umsetzer
- 116: Ein-/Ausgabe-Schnittstelle
- 117: Energie- oder Spannungsversorgungseinheit
- 118: Energy-Harvester
- 119: Gleichspannungs-Gleichspannungs-Wandler

## Patentansprüche

1. Kochgeschirr, aufweisend ein Sensorsystem
- mit mindestens einem Sensor (106),
- mit einer Einheit zur kalibrierfreien Aufbereitung (107), die ausgelegt ist mit am Eingang eines Messzweiges zumindest einem Multiplexer (111, 113), über den eine Referenz (112) und deren Referenzgröße und der mindestens eine zu messende Sensor (106) nacheinander an den Messzweig geschaltet werden, so dass vor jeder Messung mit einem solchen mindestens einen Sensor (106) zunächst die bekannten Referenzgrößen der Referenz (112) gemessen werden und danach der zu bestimmende mindestens eine Sensor (106),
- mit einem Energy-Harvester (118) und
- mit einer Funk-Übertragungseinheit (105),
- wobei der Sensor (106) mit der Einheit zur kalibrierfreien Aufbereitung (107) gekoppelt ist,
- wobei der Energy-Harvester (118) mit der Einheit zur kalibrierfreien Aufbereitung (107) gekoppelt ist und einen Thermowandler aufweist,
- wobei die Einheit zur kalibrierfreien Aufbereitung (107) mit der Funk-Übertragungseinheit (105) gekoppelt ist und
- wobei mittels der Einheit zur kalibrierfreien Aufbereitung (107) und der Funk-Übertragungseinheit (105) Veränderungen der Daten mittels differentieller Übertragung übermittelbar sind.

2. Kochgeschirr nach Anspruch 1, bei dem der Sensor (106) ein kapazitiver Sensor oder ein resistiver Sensor ist.

3. Kochgeschirr nach einem der vorhergehenden Ansprüche, bei dem der Sensor (106) mindestens einen der folgenden Sensoren umfasst: einen Drucksensor, einen Feuchtesensor, einen PH-Sensor, einen Leitfähigkeitssensor, einen Viskositätssensor, einen Temperatursensor.

4. Kochgeschirr nach einem der vorhergehenden Ansprüche, bei dem die Einheit zur kalibrierfreien Aufbereitung (107) eine Einheit zur analogen Signalaufbereitung (108) und einen Mikrocontroller (109) aufweist.

5. Kochgeschirr nach einem der vorhergehenden Ansprüche, bei dem die Referenz (112) interne Kalibrierwiderstände und der mindestens eine Sensor (106) mehrere zu messende externe Sensoren (106) aufweist.

6. Kochgeschirr nach einem der vorhergehenden Ansprüche, bei dem die Einheit zur kalibrierfreien Aufbereitung (107) ausgelegt ist, jeweils den ohmschen Widerstand der Referenzgrößen, insbesondere Widerstände, oder eine sich proportional zum ohmschen Widerstand verhaltende Größe der Referenz (112) zu messen, und einen Messstrom einzuprägen, um einen Spannungsabfall an der zugeschalteten Referenzgröße zu messen.

7. Kochgeschirr nach einem der vorhergehenden Ansprüche, bei dem der Energy-Harvester (118) weiter mindestens eine der folgenden Komponenten aufweist:
eine Solarzelle, eine elektromagnetische Kopplung.

8. Kochgeschirr nach einem der vorhergehenden Ansprüche, bei dem der Energy-Harvester (118) einen Energiespeicher aufweist oder einem Energiespeicher zugeordnet ist.

9. Kochgeschirr nach einem der vorhergehenden Ansprüche, bei dem der Energy-Harvester (118) über einen Wandler, insbesondere über einen Hochsetzer und/oder einen Tiefsetzer mit der Einheit zur kalibrierfreien Aufbereitung (107) gekoppelt ist.

10. Kochgeschirr nach einem der vorhergehenden Ansprüche, bei dem das Sensorsystem über die Funk-Übertragungseinheit (105), insbesondere einen Funktransceiver mit einer Steuereinheit des Gargeräts koppelbar ist.

11. Kochgeschirr nach Anspruch 10, bei dem mittels der Funk-Übertragungseinheit (105) Nachrichten zwischen dem Sensorsystem und dem Gargerät austauschbar sind.

12. Kochgeschirr nach einem der vorhergehenden Ansprüche, bei dem nach einer bestimmten Zeit ein vollständiger Datenrahmen übertragbar ist.

13. Verfahren zur Datenübertragung zwischen einem Kochgeschirr nach einem der vorhergehenden Ansprüche und einem Gargerät,
- bei dem von dem Sensor (106) Messwerte aufgenommen und von der Einheit zur kalibrierfreien Aufbereitung (107) verarbeitet und über eine Funk-Übertragungseinheit (7) an das Gargerät übermittelt werden,
- wobei Veränderungen der Daten mittels differentieller Übertragung übermittelt werden, und
- wobei die Einheit zur kalibrierfreien Aufbereitung (107) von dem Energy-Harvester (118) mit Energie versorgt wird, wobei der Energy-Harvester (118) einen Thermowandler aufweist.

14. Verfahren nach Anspruch 13, bei dem nach einer bestimmten Zeit ein vollständiger Datenrahmen übertragen wird.

## Claims

1. Cooking utensil, having a sensor system
- with at least one sensor (106),
- with a unit for calibration-free treatment (107) which is designed with at least one multiplexer (111, 113) at the input of a measurement branch, via which a reference (112) and its reference variable and the at least one sensor (106) to be measured are switched consecutively to the measurement branch, such that prior to every measurement with such an at least one sensor (106) the known reference variables of the reference (112) are initially measured and thereafter those of the at least one sensor (106) to be determined,
- with an energy harvester (118) and
- with a radio transmission unit (105),
- wherein the sensor (106) is coupled to the unit for calibration-free treatment (107),
- wherein the energy harvester (118) is coupled to the unit for calibration-free treatment (107) and has a thermo-converter,
- wherein the unit for calibration-free treatment (107) is coupled to the radio transmission unit (105) and
- wherein by means of the unit for calibration-free treatment (107) and the radio transmission unit (105) changes to the data can be transmitted by differential transmission.

2. Cooking utensil according to claim 1, wherein the sensor (106) is a capacitive sensor or a resistive sensor.

3. Cooking utensil according to one of the preceding claims, wherein the sensor (106) comprises at least one of the following sensors: a pressure sensor, a humidity sensor, a PH sensor, a conductivity sensor, a viscosity sensor, a temperature sensor.

4. Cooking utensil according to one of the preceding claims, wherein the unit for calibration-free treatment (107) has a unit for analogue signal conditioning (108) and a microcontroller (109).

5. Cooking utensil according to one of the preceding claims, wherein the reference (112) has internal calibration resistors and the at least one sensor (106) has a plurality of external sensors (106) to be measured.

6. Cooking utensil according to one of the preceding claims, wherein the unit for calibration-free treatment (107) is designed in each case to measure the ohmic resistance of the reference variables, in particular resistances, or a variable of the reference (112) proportional to the ohmic resistance, and to inject a measuring current in order to measure a voltage drop at the activated reference variable.

7. Cooking utensil according to one of the preceding claims, wherein the energy harvester (118) further has at least one of the following components: a solar cell, an electromagnetic coupling.

8. Cooking utensil according to one of the preceding claims, wherein the energy harvester (118) has an energy store or is associated with an energy store.

9. Cooking utensil according to one of the preceding claims, wherein the energy harvester (118) is coupled to the unit for calibration-free treatment (107) via a converter, in particular via a step-up device and/or a step-down device.

10. Cooking utensil according to one of the preceding claims, wherein the sensor system can be coupled to a control unit of the cooking device via the radio transmission unit (105), in particular a radio transceiver.

11. Cooking utensil according to claim 10, wherein messages can be exchanged between the sensor system and the cooking device by means of the radio transmission unit (105).

12. Cooking utensil according to one of the preceding claims, wherein a full data frame can be transmitted after a set time.

13. Method for data transmission between a cooking utensil according to one of the preceding claims and a cooking device,
- wherein measured values are recorded by the sensor (106) and are processed by the unit for calibration-free treatment (107) and transmitted to the cooking device via a radio transmission unit (7),
- wherein changes to the data are transmitted by means of differential transmission, and
- wherein the unit for calibration-free treatment (107) is supplied with energy by the energy harvester (118), wherein the energy harvester (118) has a thermo-converter.

14. Method according to claim 13, wherein a full data frame is transmitted after a set time.

## Revendications

1. Récipient de cuisson présentant un système de capteurs
- comprenant au moins un capteur (106),
- comprenant une unité pour le traitement (107) exempt de calibrage, laquelle est conçue avec au moins un multiplexeur (111, 113) à l'entrée d'un branchement de mesure, par l'intermédiaire duquel une référence (112) et la grandeur de référence de celle-ci et l'au moins un capteur (106) à mesurer sont commutés l'un après l'autre sur le branchement de mesure, de sorte qu'avant chaque mesure avec un tel au moins capteur (106), d'abord les grandeurs de référence connues de la référence (112) sont mesurées et ensuite l'au moins un capteur (106) à déterminer
- comprenant un Energy Harvester (118) et
- comprenant une unité de transmission radio (105),
- le capteur (106) étant couplé à l'unité pour le traitement (107) exempt de calibrage,
- l'Energy Harvester (118) étant couplé à l'unité pour le traitement (107) exempt de calibrage et présentant un convertisseur thermoélectrique,
- l'unité pour le traitement (107) exempt de calibrage étant couplé à l'unité de transmission radio (105), et
- des modifications des données, au moyen de l'unité pour le traitement (107) exempt de calibrage et de l'unité de transmission radio (105), étant transmissibles par transmission différentielle.

2. Récipient de cuisson selon la revendication 1, dans lequel le capteur (106) est un capteur capacitif ou résistif.

3. Récipient de cuisson selon l'une quelconque des revendications précédentes, dans lequel le capteur (106) comprend au moins l'un des capteurs suivants : un capteur de pression, un capteur d'humidité, un capteur de ph, un capteur de conductivité, un capteur de viscosité, un capteur de température.

4. Récipient de cuisson selon l'une quelconque des revendications précédentes, dans lequel l'unité pour le traitement (107) exempt de calibrage présente une unité pour le traitement de signal (108) analogique et un microcontrôleur (109).

5. Récipient de cuisson selon l'une quelconque des revendications précédentes, dans lequel la référence (112) présente des résistances de calibrage internes et dans lequel l'au moins un capteur (106) présente des capteurs (106) externes à mesurer.

6. Récipient de cuisson selon l'une quelconque des revendications précédentes, dans lequel l'unité pour le traitement (107) exempt de calibrage est conçue pour mesurer respectivement la résistance ohmique des grandeurs de référence, notamment des résistances, ou une grandeur de la référence (112), se comportant proportionnellement à la résistance ohmique, et pour appliquer un courant de mesure afin de mesurer une baisse de tension sur la grandeur de référence connectée.

7. Récipient de cuisson selon l'une quelconque des revendications précédentes, dans lequel l'Energy Harvester (118) présente en outre au moins l'un des composants suivants : une cellule solaire, un couplage électromagnétique.

8. Récipient de cuisson selon l'une quelconque des revendications précédentes, dans lequel l'Energy Harvester (118) présente un accumulateur d'énergie ou est associé à un accumulateur d'énergie.

9. Récipient de cuisson selon l'une quelconque des revendications précédentes, dans lequel l'Energy Harvester (118) est couplé à l'unité pour le traitement (107) exempt de calibrage par l'intermédiaire d'un convertisseur, notamment par l'intermédiaire d'un convertisseur élévateur et/ou d'un convertisseur abaisseur.

10. Récipient de cuisson selon l'une quelconque des revendications précédentes, dans lequel le système de capteurs peut être couplé à une unité de commande de l'appareil de cuisson par l'intermédiaire de l'unité de transmission radio (105), notamment par l'intermédiaire d'un émetteur-récepteur radio.

11. Récipient de cuisson selon la revendication 10, dans lequel des informations peuvent être échangées entre le système de capteurs et l'appareil de cuisson au moyen de l'unité de transmission radio (105).

12. Récipient de cuisson selon l'une quelconque des revendications précédentes, dans lequel un cadre de données complet peut être transmis après un temps déterminé.

13. Procédé de transmission de données entre un récipient de cuisson selon l'une quelconque des revendications précédentes et un appareil de cuisson,
- dans lequel des valeurs de mesure sont prélevées au capteur (106) et traitées par l'unité pour le traitement (107) exempt de calibrage et transmises à l'appareil de cuisson par l'intermédiaire d'une unité de transmission radio (7),
- dans lequel des modifications des données sont transmises par transmission différentielle, et
- l'unité pour le traitement (107) exempt de calibrage étant alimentée en énergie par l'Energy Harvester (118), l'Energy Harvester (118) présentant un convertisseur thermoélectrique.

14. Procédé selon la revendication 13, dans lequel un cadre de données complet est transmis après un temps déterminé.
